# EUROPEAN PATENT APPLICATION

(11) **EP 4 395 105 A1**
(43) Date of publication of application: **03.07.2024**
(21) Application number: 21958782.1
(22) Date of filing: 29.09.2021
(51) Int. Cl.: H02J 7/00

(54) **CHARGING CONTROL METHOD AND APPARATUS AND CHARGING SYSTEM**

(71) Applicant: Huawei Technologies Co., Ltd., Shenzhen, Guangdong 518129 (CN)
(72) Inventor: FU, Zhanyu, Shenzhen, Guangdong 518129 (CN); ZHANG, Peng, Shenzhen, Guangdong 518129 (CN); HU, Fengsheng, Shenzhen, Guangdong 518129 (CN)
(74) Representative: Gill Jennings & Every LLP
(86) International application number: PCT/CN2021/121821
(87) International publication number: WO 2023/050193

(57) **Abstract**

This application provides a charging control method and apparatus and a charging system. The method includes: obtaining a required power of a battery module and maximum output powers of charging piles to which M charging connectors respectively belong, where the battery module includes a plurality of charging interfaces, and the M charging connectors include a charging connector connected to any one of the plurality of charging interfaces; obtaining N target charging connectors from the M charging connectors based on the required power of the battery module and the maximum output powers of the charging piles to which the M charging connectors respectively belong; and controlling to charge the battery module by using the N target charging connectors. In this way, a total charging power output by a specific quantity of charging connectors currently participating in charging the battery module matches a current required power of the battery module, to facilitate appropriate use of charging resources.

## Description

### TECHNICAL FIELD

This application relates to the field of new energy vehicles, and more specifically, to a charging control method and apparatus and a charging system.

### BACKGROUND

With popularization of new energy vehicles, a charging speed of new energy vehicles is increasingly concerned. Direct current charging is increasingly widely used because of a high charging speed of the direct current charging.

In order to improve a charging speed, two direct current charging interfaces are designed in a charging system for some new energy vehicles. A charging connector on the charging pile is inserted into the direct current charging interface, and the charging pile may output charging power through the charging connector, to charge the vehicle. However, in an actual charging process, when charging starts, a user may insert two charging connectors due to a high required charging power. However, a required power of the car changes with time. After charging for a period of time, the required charging power may decrease, but the two charging connectors are still used for charging at the same time, causing waste of charging resources. In addition, charging of another car having a charging requirement cannot be completed in a timely manner because an output power of another charging connector on a same charging pile is low.

Therefore, it is expected to provide a method, so that a quantity of charging connectors required for charging can be adjusted based on an actual requirement, to properly use charging resources.

### SUMMARY

This application provides a charging control method and apparatus and a charging system, to flexibly adjust, based on an actual requirement, a quantity of charging connectors for charging, to properly use charging resources.

According to a first aspect, this application provides a charging control method. The method may be performed by a charging control apparatus, or may be performed by a component (such as a circuit, a chip, or a chip system) configured in the charging control apparatus, or may be implemented by a logical module or software that can implement all or some functions of the charging control apparatus. This is not limited in this application.

For example, the method includes: obtaining a required power of a battery module, where the battery module has a plurality of charging interfaces, and the required power is a charging power required by the battery module; and obtaining maximum output powers of charging piles to which M charging connectors respectively belong, where the M charging connectors include a charging connector that establishes a connection to any one of the plurality of charging interfaces; obtaining, based on the required power of the battery module and the maximum output powers of the charging piles to which the M charging connectors respectively belong, N target charging connectors from the M charging connectors, where the required power is the charging power required by the battery module, and N≤M, M>1, and M and N are integers; and controlling, by a charging control apparatus, to charge the battery module by using the N target charging connectors.

Based on the foregoing technical solution, when it is determined that at least two charging connectors are inserted into a plurality of charging interfaces, the charging control apparatus determines, based on a value relationship obtained through comparison between a current required power of the battery module and a maximum output power of a charging pile to which each inserted charging connector belongs, specific charging connectors that are in the inserted charging connectors and that are used to charge the vehicle, to control the determined charging connectors to charge the vehicle. In this way, a total charging power output by a specific quantity of charging connectors currently participating in charging the battery module matches the current required power of the battery module, so that excessive charging resources are not occupied. This improves a charging speed of another vehicle that is on a same charging pile and that is charged by using another charging connector, and implements appropriate use of charging resources on the whole.

Each charging connector may establish a connection to one charging interface, and each charging connector may charge the battery module by using the connected charging interface. The M charging connectors are charging connectors that establish connections to M charging interfaces in the plurality of charging interfaces.

The maximum output power of the charging pile may be understood as follows: If a charging pile includes one charging connector, a maximum output power of the charging connector is a maximum output power of the charging pile. If a charging pile includes a plurality of charging connectors, a sum of output powers of the plurality of charging connectors does not exceed a maximum output power of the charging pile. Specifically, if one or more charging connectors in the charging pile output a power, for any remaining charging connector, a maximum output power of the remaining charging connector may be the maximum output power of the charging pile minus the power that is being output. If all charging connectors in the charging pile output powers, a maximum output power of any one of the charging connectors may be a maximum output power of the charging pile. Therefore, generally, if a plurality of charging connectors are used to charge a battery module, it indicates that a maximum output power of one charging connector (that is, a current maximum output power of a charging pile to which the charging connector belongs) is insufficient to meet a required power of the battery module. Therefore, output powers of the plurality of charging piles need to be accumulated to meet the required power of the battery module. In other words, the plurality of charging connectors should be charging connectors from a plurality of charging piles.

With reference to the first aspect, in some possible implementations of the first aspect, a sum of maximum output powers of charging piles to which the N target charging connectors respectively belong is greater than or equal to the required power, and a sum of maximum output powers of charging piles to which any N-1 of the N target charging connectors respectively belong is less than the required power.

In other words, the N target charging connectors belong to charging piles that can provide a sum of maximum output powers that just meets the required power. If any one of the charging connectors is disconnected from a charging interface, a sum of maximum output powers provided by the remaining N-1 charging connectors does not meet the required power. In other words, a total charging power output by the N target charging connectors participating in charging the battery module matches a current required power of the battery module.

In other words, if a sum of maximum output powers of charging piles to which any M-i charging connectors of the M charging connectors respectively belong is less than the required power, and a sum of maximum output powers of M-i+1 charging connectors is greater than or equal to the required power, the M-i+1 charging connectors are determined as the N target charging connectors, where 0<i≤M-1, and i is an integer.

For example, M is equal to 2. If a maximum output power of any one of charging piles to which two charging connectors respectively belong is less than the required power, the battery module needs to be charged by using the two charging connectors, that is, target charging connectors are the two charging connectors. If a maximum output power of a specific charging pile in charging piles to which two charging connectors respectively belong is greater than or equal to the required power, the battery module may be charged by using a charging connector on the charging pile. In other words, a target charging connector is a charging connector on a charging pile whose maximum output power is greater than or equal to the required power.

By analogy, a rule for determining the N target charging connectors when M is greater than or equal to 2 may be obtained as follows: If a sum of maximum output powers of charging piles to which any M-i charging connectors of the M charging connectors respectively belong is less than the required power, and a sum of maximum output powers of M-i+1 charging connectors is greater than or equal to the required power, the M-i+1 charging connectors respectively belonging to such charging piles are determined as the N target charging connectors.

In this way, when charging interfaces of the battery module establishes connections to the M charging connectors, the charging control apparatus can flexibly adjust, based on a current required power of the battery module, a target charging connector used for charging, to reduce power waste, avoid using excessive charging resources, and improve a charging speed of another vehicle that is on a same charging pile and that is charged by using another charging connector. On the whole, charging resources are used appropriately.

With reference to the first aspect, in some possible implementations of the first aspect, before the controlling to charge the battery module by using the N target charging connectors, the method further includes: sending a first charging request to a charging pile to which each of the N target charging connectors belongs, where the first charging request includes a requested output power, and the requested output power is a power that is required to be output by a charging pile that receives the first charging request.

The first charging request is separately sent to the charging piles to which the N target charging connectors respectively belong, so that the battery module can be controlled to charge the battery module by using the N target charging connectors. Because a value of a power that is required to be output by each charging pile is included in each first charging request, a total output power of the charging piles to which the N target charging connectors respectively belong can match the required power of the battery module, to avoid waste of charging resources.

Further, the method further includes: determining requested output powers of N charging piles based on the required power of the battery module and maximum output powers of the N charging piles.

The following provides two possible implementations of determining the requested output powers of the N charging piles.

In a first possible implementation, when a sum of the maximum output powers of the N charging piles is equal to the required power, it is determined that the requested output powers of the N charging piles are respective maximum output powers.

When the required power of the battery module is equal to the sum of the maximum output powers of the N charging piles, the N charging piles are all enabled to output the respective maximum output powers, to ensure that charging resources provided for the battery module are sufficient but not excessive, so that charging resources are appropriately used.

In a second possible implementation, when a sum of the maximum output powers of the N charging piles is greater than the required power, a requested output power of a first charging pile in the N charging piles is determined as X-P_{N-1}, where the first charging pile is any one of the N charging piles, and X is the required power, P_{N-1} is a sum of maximum output powers of other charging piles in the N charging piles than the first charging pile, where X>P_{N-1}>0; and it is determined that requested output powers of the other charging piles are respective maximum output powers.

Still further, the first charging pile is a charging pile with a smallest value of a maximum output power in the N charging piles.

When the required power of the battery module is less than the sum of the maximum output powers of the N charging piles, the charging pile with a smallest value of a maximum output power in the N charging piles is determined as the first charging pile, the other charging piles in the N charging piles than the first charging pile are enabled to output the respective maximum output powers, and the first charging pile is enabled to output power of a value X-P_{N-1}, where X-P_{N-1} is a difference between the required power of the battery module and the sum of maximum output powers of the other charging piles. In this way, it is ensured that the required power of the battery module matches the charging resources provided for the battery module, the provided charging resources are neither insufficient nor excessive, so that charging resources are appropriately used.

With reference to the first aspect, in some possible implementations of the first aspect, the method further includes: sending a second charging request to a charging pile to which each of other charging connectors than the N target charging connectors in the M charging connectors belongs, where the second charging request is used to indicate not to output a power.

For example, in a possible manner in which the second charging request is used to indicate not to output a power, the second charging request indicates that a requested output power is zero.

The second charging request is sent to the charging pile to which each of the other charging connectors than the target charging connectors belongs, to indicate not to output a power, so that the battery module is controlled not to continue to use the other charging connectors for charging. In this way, an unnecessary power output can be avoided, and waste of charging resources can be reduced. In a possible scenario, the battery module is initially charged by using two charging connectors. However, as charging time advances, a required power of the battery module gradually decreases. After a period of time, only one charging connector may need to be used to charge the battery module, to meet the required power. In this case, the other charging connector may be controlled to stop charging by using the foregoing method, to avoid unnecessary power output and reduce waste of charging resources.

With reference to the first aspect, in some possible implementations of the first aspect, in the plurality of charging interfaces, a positive electrode of each charging interface is connected to the battery module by using a positive electrode switch, and a negative electrode of each charging interface is connected to the battery module by using a negative electrode switch.

The positive electrode switch and the negative electrode switch are disposed between the charging interface and the battery module. The charging control apparatus may control a conduction status of a circuit between the charging connector and the battery module by controlling a status such as on or off of the positive electrode switch or the negative electrode switch. The conduction status includes being connected or disconnected, to ensure that the charging power output by the charging pile can be smoothly transferred to the battery module or is not transferred to the battery module.

In a high-voltage power-on working condition, especially in a working condition in which a battery module is slowly charged, if only one positive electrode switch or a negative electrode switch is designed for each direct current charging interface, even if the switch is turned off, high-voltage electricity is exposed to positive and negative electrodes at two ends of the switch. If a human body touches the positive and negative electrodes at two ends of the switch, a conductive circuit is formed, and there is an electric shock risk. In this application, the positive electrode switch and the negative electrode switch are designed for each direct current charging interface. When the direct current charging interface is disconnected, both the positive electrode switch and the negative electrode switch are controlled to be turned off. Even if a human body touches positive and negative electrodes at two ends of a specific switch, because the other switch is disconnected, high-voltage electricity is not exposed to positive and negative electrodes of the positive electrode switch or the negative electrode switch, to reduce an electric shock risk.

With reference to the first aspect, in some possible implementations of the first aspect, after the controlling to charge the battery module by using the N target charging connectors, the method further includes: controlling positive electrode switches and negative electrode switches of N charging interfaces that are connected to the N target charging connectors to be turned on; and controlling positive electrode switches and negative electrode switches of the other charging interfaces in the plurality of charging interfaces to be turned off.

Circuits to which the charging interfaces connected to the target charging connectors belong are controlled to be connected, and circuits to which the other charging interfaces belong are disconnected. This ensures that output powers of the charging piles to which the target charging connectors belong can be normally transmitted to the battery module for charging, avoids powers of charging piles to which the other charging connectors than the target charging connectors belong are output inappropriately, and avoids waste of charging resources.

With reference to the first aspect, in some possible implementations of the first aspect, the plurality of charging interfaces are direct current charging interfaces.

Compared with an alternating current charging interface, the direct current charging interface can reduce costs and improve a charging speed.

According to a second aspect, this application provides a charging control apparatus, including a module or a unit configured to implement the method according to any one of the first aspect or the possible implementations of the first aspect. It should be understood that the module or unit may implement a corresponding function by executing a computer program.

According to a third aspect, this application provides a charging control apparatus. The apparatus includes a processor, and the processor is configured to perform the charging control method according to any one of the first aspect or the possible implementations of the first aspect.

The apparatus may further include a memory. The memory is configured to store instructions and data. The memory is coupled to the processor, and when executing the instructions stored in the memory, the processor can implement the method described in the foregoing aspect. The apparatus may further include a communication interface. The communication interface is used by the apparatus to communicate with another device. For example, the communication interface may be a transceiver, a circuit, a bus, a module, or another type of communication interface.

According to a fourth aspect, this application provides a chip system. The chip system includes at least one processor, configured to support implementation of a function according to any one of the first aspect or the possible implementations of the first aspect, for example, receiving or processing data and/or information in the foregoing method.

In a possible design, the chip system further includes a memory. The memory is configured to store program instructions and data. The memory is located inside the processor or outside the processor.

The chip system may include a chip, or may include a chip and another discrete component.

According to a fifth aspect, this application provides a charging system. The charging system includes: a battery module; a plurality of direct current charging interfaces connected to the battery module, where each of the plurality of direct current charging interfaces is configured to connect to a charging connector; and a charging control apparatus, connected to each of the plurality of direct current charging interfaces through a communication cable. The charging control apparatus is configured to perform the charging control method according to any one of the first aspect or the possible implementations of the first aspect.

With reference to the second aspect, the third aspect, or the fifth aspect, in some possible implementations, the charging control apparatus is a battery management system (battery management system, BMS).

According to a sixth aspect, this application provides a computer-readable storage medium. The computer-readable storage medium includes a computer program. When the computer program is run on a computer, the computer is enabled to implement the charging control method according to any one of the first aspect or the possible implementations of the first aspect.

According to a seventh aspect, this application provides a computer program product. The computer program product includes a computer program (which may also be referred to as code or instructions). When the computer program is run, a computer is enabled to perform the charging control method according to any one of the first aspect or the possible implementations of the first aspect.

It should be understood that the second aspect to the seventh aspect of this application correspond to the technical solutions of the first aspect of this application, and beneficial effects achieved by the aspects and the corresponding feasible implementations are similar. Details are not described again.

### BRIEF DESCRIPTION OF DRAWINGS

FIG. 1 is a schematic diagram of a circuit structure of a charging system of a charging control method according to an embodiment of this application;
FIG. 2 is a schematic diagram of another circuit structure of a charging system of a charging control method according to an embodiment of this application;
FIG. 3 is a schematic flowchart of a charging control method according to an embodiment of this application;
FIG. 4 is a schematic flowchart of charging by using two charging piles according to an embodiment of this application;
FIG. 5 is a schematic diagram of a scenario in which two charging piles are used for charging according to an embodiment of this application;
FIG. 6 is a schematic block diagram of a battery management system according to an embodiment of this application; and
FIG. 7 is another schematic block diagram of a battery management system according to an embodiment of this application.

### DESCRIPTION OF EMBODIMENTS

The following describes technical solutions of this application with reference to accompanying drawings.

For ease of understanding, the following points are first described:
First, a charging system provided in embodiments of this application is described below with reference to a plurality of accompanying drawings. For ease of distinguishing, in the figures, energy is shown by using solid lines, and data is shown by using dashed lines. The energy may be specifically energy input by a charging connector to a charging interface. The data may be specifically a signal, a message, an instruction, or the like that is sent by a charging control apparatus (for example, a BMS) to a switch, a charging interface, or the like.
Second, one charging pile may include one or more charging connectors, to ensure that a charging power output by the charging pile can meet a charging requirement of a vehicle and that an operation is convenient. When one charging pile includes a plurality of charging connectors, the charging connectors may be respectively connected to charging interfaces of different vehicles.

A maximum output power of the charging pile may be a sum of maximum powers that can be output by the plurality of charging connectors included in the charging pile. If the charging pile includes one charging connector, a maximum output power of the charging connector is a maximum output power of the charging pile. If a charging pile includes a plurality of charging connectors, a sum of output powers of the plurality of charging connectors does not exceed a maximum output power of the charging pile. Specifically, if one or more charging connectors in the charging pile output powers, for any remaining charging connector, a maximum output power of the charging connector may be a maximum output power of the charging pile minus the powers that are output. If all charging connectors in the charging pile are outputting powers, a maximum output power of any one of the charging connectors may be a maximum output power of the charging pile.

For example, a maximum output power of a specific charging pile is 300 kilowatts (kW), and the charging pile includes two charging connectors, for example, denoted as a charging connector 1 and a charging connector 2. If the charging connector 1 is in use and an output power is 200 kW, a maximum output power of the charging connector 2 may be 100 kW. However, if the charging pile 1 is in use and an output power is 300 kW, a maximum output power of the charging connector 2 is 0.

Third, M charging connectors connected to charging interfaces mentioned below are in a one-to-one correspondence with M charging piles, and N target charging connectors are in a one-to-one correspondence with N charging piles. When a plurality of charging connectors are inserted into charging interfaces, it indicates that a plurality of charging piles are connected to the charging interfaces by using the respective charging connectors. When a plurality of charging connectors are used to charge a same battery module, it indicates that a plurality of charging piles output energy to the same battery module by using the respective charging connectors.

It should be understood that, if a plurality of charging connectors are used to charge a battery module, it usually indicates that a maximum output power of one charging connector (that is, a current maximum output power of a charging pile to which the charging connector belongs) is insufficient to meet a required power of the battery module. Therefore, output powers of a plurality of charging piles need to be accumulated to meet the required power of the battery module. In other words, the plurality of charging connectors should be charging connectors from the plurality of charging piles. Therefore, when a maximum output power of one charging pile is insufficient to meet a required power of a battery module, a user does not use two charging connectors of a same charging pile to charge the battery module at the same time. In other words, when a plurality of charging connectors are used to charge a battery module, it indicates that the battery module receives output powers from a plurality of charging piles.

Fourth, for ease of understanding, the following accompanying drawings describe a method provided in embodiments of this application with reference to a circuit structure related to direct current charging. However, this should not constitute any limitation on this application. The method provided in this application may also be applied to alternating current charging. Although circuit structures are slightly different, implementation of a charging control method provided in this application is not affected.

Fifth, the charging interface in embodiments of this application may be specifically an interface assembly. For components specifically included in the charging interface assembly, refer to a related standard. For example, a direct current charging interface assembly may specifically include a direct current charging interface, a high-voltage cable bundle, a high-voltage connector, and the like that are defined in the national standard GB20234.3. The direct current charging interface may be configured to provide a power conduction circuit for direct current charging.

Sixth, it may be understood that, in embodiments of this application, "when", "it is assumed that", and "if" mean that an apparatus performs corresponding processing in an objective situation, are not intended to limit time, do not require the apparatus to necessarily have a determining action during implementation, and do not mean other limitation.

The technical solutions provided in this application may be applied to the field of new energy vehicles (new energy vehicles). A new energy vehicle is a vehicle that uses nonconventional vehicle fuel as a motive power source (or uses conventional vehicle fuel and a new vehicle-mounted motive power apparatus) and integrates advanced technologies in vehicle motive power control and driving, featuring advanced technical principles, new technologies, and new structures.

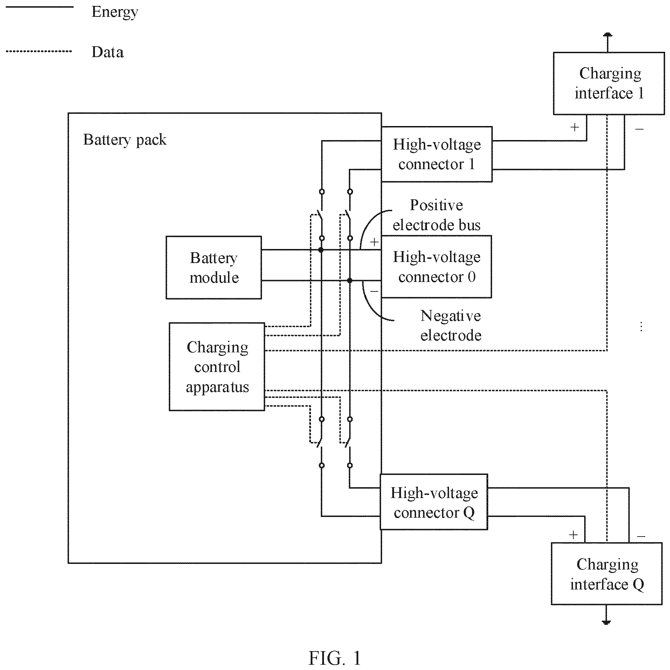

FIG. 1 is a schematic diagram of a circuit structure of a charging system applicable to a charging control method according to an embodiment of this application. As shown in FIG. 1, the charging system includes a battery module, a charging control apparatus, and a plurality of charging interfaces connected to the battery module. The battery module and the charging control apparatus may be designed in a battery pack, and are connected to the plurality of charging interfaces outside the battery pack through a bus.

As shown in the figure, the plurality of charging interfaces may include a charging interface 1, ..., and a charging interface Q shown in the figure. Q is a positive integer greater than or equal to 2. Each charging interface may be connected to a charging connector, and the charging connector is connected to a charging pile.

A positive electrode of each charging interface may be connected to the battery module by using a positive electrode switch, and a negative electrode of each charging interface may be connected to the battery module by using a negative electrode switch (the positive and negative electrodes of the charging interface are not shown in the figure).

A plurality of high-voltage connectors are further disposed outside a housing of the battery pack, such as a high-voltage connector 1 to a high-voltage connector Q shown in the figure. The plurality of high-voltage connectors may connect a positive electrode bus and a negative electrode bus between the battery module and the charging interface, and the high-voltage connector may ensure voltage safety of a circuit between the charging interface and the battery module.

In addition, the battery module may further be directly connected to a high-voltage connector (for example, a high-voltage connector 0 shown in the figure) outside the housing of the battery pack. The high-voltage connector may be configured to connect a positive electrode bus and a negative electrode bus of the battery module that extend out, to ensure voltage safety of a circuit to which the battery module belongs.

The charging control apparatus may be connected to each charging interface through a communication cable, and the charging control apparatus may exchange a signal, a message, or an instruction with each charging interface through the communication cable. For the switch between the battery module and each charging interface, the charging control apparatus may also be connected to each switch through a communication cable, and control the switch to be turned on or turned off through the communication cable. The charging control apparatus may also be connected to a component of a circuit to which the battery module belongs through a communication cable (a circuit structure to which the battery module belongs is not shown in the figure), and control the circuit to which the battery module belongs through the communication cable. In actual application, the charging control apparatus may be a BMS.

In an actual charging process, any quantity of charging interfaces may be connected to charging connectors, and when the charging control apparatus controls switches between the any quantity of charging interfaces and the battery module to be turned on, a charging power output by a charging pile may be input to the battery module through the any quantity of charging interfaces, to charge the battery module. It should be noted that a value of the any quantity is at least 1.

In some designs, the battery module, the charging control apparatus, the switch, and the high-voltage connector are used as a whole, and are referred to as a battery pack. It should be understood that the battery pack further includes another component, and FIG. 1 should not constitute any limitation on a circuit structure in the battery pack.

It should be further understood that in the circuit structure shown in FIG. 1, the Q charging interfaces may be Q direct current charging interfaces, or may be Q alternating current charging interfaces. It may be understood that based on different types of charging interfaces, components included in the battery pack may also be different. For example, for the Q alternating current charging interfaces, the battery pack may further include Q chargers that are connected to the Q charging interfaces in a one-to-one manner. The Q chargers may be further connected to the battery module, to implement connection between the Q charging interfaces and the battery module.

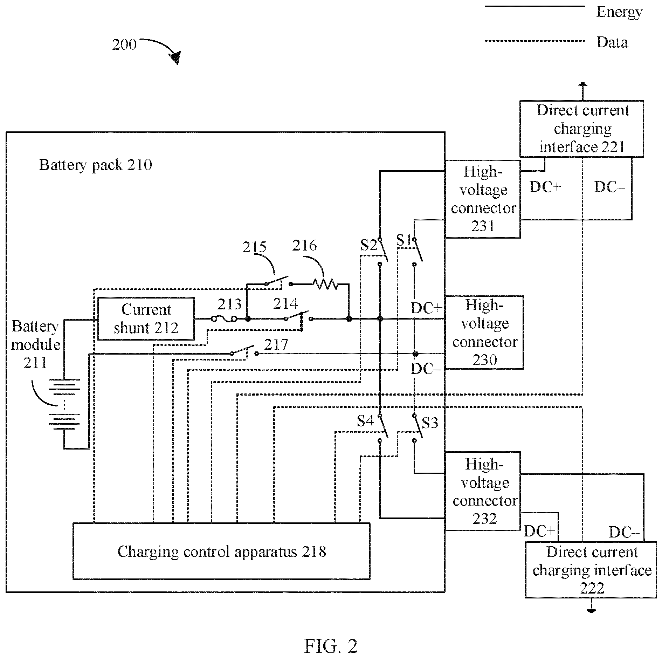

FIG. 2 is a schematic diagram of another circuit structure of a charging system applicable to a charging control method according to an embodiment of this application. FIG. 2 shows a circuit structure of a charging system applicable to direct current charging. As shown in FIG. 2, the charging system 200 includes a battery pack 210, a direct current charging interface 221, a direct current charging interface 222, and three high-voltage connectors located outside a housing of the battery pack 210. The three high-voltage connectors are a high-voltage connector 230, a high-voltage connector 231, and a high-voltage connector 232.

The battery pack 210 may include a battery module 211, a current shunt 212, a fuse 213, a positive electrode main switch 214, a pre-charging switch 215, a pre-charging resistor 216, and a negative electrode main switch 217. The pre-charging switch 215 and the pre-charging resistor 216 are connected in parallel to two ends of the positive electrode main switch 214. The current shunt 212, the fuse 213, the positive electrode main switch 214, the pre-charging switch 215, and the pre-charging resistor 216 may be disposed on a positive electrode direct current bus (for example, "DC+" in the figure) of a circuit to which the battery module 210 belongs, and the negative electrode main switch 217 may be disposed on a negative electrode direct current bus (for example, "DC-" in the figure) of the circuit to which the battery module 210 belongs. DC indicates direct current (direct current), and "+" and "-" indicate positive and negative. In addition, the positive electrode direct current bus and the negative direct current bus of the circuit to which the battery module 210 belongs are connected by using the high-voltage connector 230. In some other possible designs, the pre-charging switch 215 and the pre-charging resistor 216 may be connected in parallel to two ends of the positive electrode main switch 214. The current shunt 212, the fuse 213, the positive electrode main switch 214, the pre-charging switch 215, and the pre-charging resistor 216 may be disposed on the negative electrode direct current bus of the circuit to which the battery module 210 belongs, and the negative electrode main switch 217 may be disposed on the positive electrode direct current bus of the circuit to which the battery module 210 belongs. This is not limited in this application.

The battery module 211 is connected to the direct current charging interface 1 through a positive electrode direct current bus and a negative electrode direct current bus of the direct current charging interface 1. One end of the positive electrode direct current bus of the direct current charging interface 1 is connected to the direct current charging interface 1, and the other end of the positive electrode direct current bus is connected to the positive electrode direct current bus of the circuit to which the battery module 211 belongs. One end of the negative electrode direct current bus of the direct current charging interface 1 is connected to the direct current charging interface 1, and the other end of the negative electrode direct current bus is connected to the negative electrode direct current bus of the circuit to which the battery module 211 belongs. The positive electrode direct current bus and the negative electrode direct current bus of the direct current charging interface 1 are connected by using the high-voltage connector 231. A positive electrode switch S2 may be disposed on the positive electrode direct current bus of the direct current charging interface 1, and a negative electrode switch S1 may be disposed on the negative electrode direct current bus of the direct current charging interface 1.

The battery module 211 is connected to the direct current charging interface 2 through a positive electrode direct current bus and a negative electrode direct current bus of the direct current charging interface 2. One end of the positive electrode direct current bus of the direct current charging interface 2 is connected to the direct current charging interface 2, and the other end of the positive electrode direct current bus is connected to the positive electrode direct current bus of the circuit to which the battery module 211 belongs. One end of the negative electrode direct current bus of the direct current charging interface 2 is connected to the direct current charging interface 2, and the other end of the negative electrode direct current bus is connected to the negative electrode direct current bus of the circuit to which the battery module 211 belongs. The positive electrode direct current bus and the negative direct current bus of the direct current charging interface 2 are connected by using the high-voltage connector 232. A positive electrode switch S4 may be disposed on the positive electrode direct current bus of the direct current charging interface 2, and a negative electrode switch S3 may be disposed on the negative direct current bus of the direct current charging interface 2.

It should be understood that the positive electrode switch of the direct current charging interface is a positive electrode circuit switch. When the positive electrode switch is turned on, a positive electrode circuit is connected; and when the positive electrode switch is turned off, the positive electrode circuit is disconnected. The negative electrode switch is a negative electrode circuit switch. When the negative electrode switch is turned on, a negative electrode circuit is connected; and when the negative electrode switch is turned off, the negative electrode circuit is disconnected.

It should be further understood that, in the schematic diagram of the circuit structure shown in FIG. 2, the positive electrode direct current bus and the negative electrode direct current bus of the direct current charging interface are respectively disposed with the positive electrode switch and the negative electrode switch. However, this should not constitute a limitation on this application. In some other possible designs, a switch may be disposed on either the positive electrode direct current bus or the negative electrode direct current bus of the direct current charging interface. This is not limited in this application.

It may be understood that, the positive electrode switch and the negative electrode switch are respectively disposed on the positive electrode direct current bus and the negative electrode direct current bus of the direct current charging interface, so that in a case of non-direct current charging (for example, a charging connector of an alternating current charging pile is inserted into the direct current charging interface) and powering on at a high voltage, a positive electrode of the direct current charging interface is not exposed to the charging interface with high voltage, to avoid an accidental electric shock of a person.

The battery pack 210 further includes a charging control apparatus 218. The charging control apparatus 218 is separately connected to the direct current charging interface through a communication cable, and the communication cable is a communication channel between the charging control apparatus 218 and a charging pile connected to the direct current charging interface. As shown in FIG. 2, the charging control apparatus 218 is connected to the direct current charging interface 1 through a communication cable, and is connected to the direct current charging interface 2 through another communication cable. The charging control apparatus 218 is also separately connected to the positive and negative electrode switches of the direct current charging interfaces through communication cables. The charging control apparatus 218 may control, through the communication cables, the positive and negative electrode switches to be turned on or turned off. As shown in FIG. 2, the charging control apparatus 218 is connected to the positive electrode switch S2 of the direct current charging interface 1 through a communication cable, and is connected to the negative electrode switch S1 of the direct current charging interface 1 through another communication cable. The charging control apparatus 218 is connected to the positive electrode switch S4 of the direct current charging interface 2 through another communication cable, and is connected to the negative electrode switch S3 of the direct current charging interface 2 through a communication cable. The charging control apparatus 218 may be further connected, through communication cables, to the positive electrode main switch 214, the pre-charging switch 215, and the negative electrode main switch 217 on the circuit to which the battery module 211 belongs, to control on/off states of the positive electrode main switch 214, the pre-charging switch 215, and the negative electrode main switch 217.

The direct current charging interface, the positive electrode direct current bus of the direct current charging interface, the negative direct current bus of the direct current charging interface, and the high-voltage connector may form a power conduction circuit. When the direct current charging interface is connected to the charging connector, the charging control apparatus controls the positive electrode switch and the negative electrode switch of the direct current charging interface to be turned on, and controls the positive electrode main switch, the pre-charging switch, and the negative electrode main switch of the circuit to which the battery module belongs to be turned on, the charging connector outputs a charging power, and can input a current into the battery module through the power conduction circuit, to charge a vehicle.

As described above, in a current actual charging process, when charging starts, a user may insert a plurality of charging connectors due to relatively a high required power of a vehicle. However, as charging is performed, a required power of the vehicle gradually decreases. In this case, if the plurality of charging connectors are still used for charging at the same time, waste of charging resources is caused, and another vehicle that has a charging requirement cannot complete charging in a timely manner because an output power of another charging connector on a same charging pile is low. Therefore, currently, appropriate use of charging resources cannot be implemented because a quantity of charging connectors required for charging cannot be adjusted based on an actual requirement.

In view of this, this application provides a charging control method. When it is determined that at least two charging connectors are inserted into a plurality of charging interfaces, the charging control apparatus determines, based on a value relationship obtained through comparison between a current required power of the battery module of the vehicle and a maximum output power of a charging pile to which each inserted charging connector belongs, specific charging connectors that are in the inserted charging connectors and that are used to charge the vehicle, to control the determined charging connectors to charge the vehicle. In this way, a total charging power output by a specific quantity of charging connectors currently participating in charging matches the current required power of the battery module, so that excessive charging resources are not occupied. This improves a charging speed of another vehicle that is on a same charging pile and that is charged by using another charging connector, and implements appropriate use of charging resources.

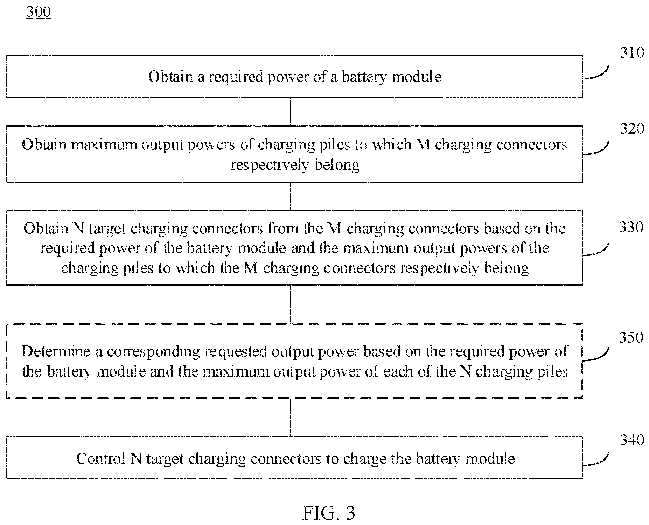

The following describes in detail the charging control method provided in embodiments of this application with reference to the accompanying drawings. FIG. 3 is a schematic flowchart of a charging control method according to an embodiment of this application. The method 300 shown in FIG. 3 includes step 310 to step 350.

The method 300 may be performed by a charging control apparatus, or may be performed by a component (such as a circuit, a chip, or a chip system) configured in the charging control apparatus, or may be implemented by a logical module or software that can implement all or some functions of the charging control apparatus. This is not limited in this application. The charging control apparatus may be, for example, a BMS.

The following describes the steps in the method 300 shown in FIG. 3 in detail.

Step 310: Obtain a required power of a battery module.

The required power of the battery module is a charging power required by the battery module. As a management device of the battery module, the charging control apparatus may monitor a status of the battery module, and obtain a charging power currently required by the battery module.

Step 320: Obtain maximum output powers of charging piles to which M charging connectors respectively belong.

The M charging connectors include a charging connector that establishes a connection to any one of a plurality of charging interfaces in the battery module. As described above, each charging interface may establish a connection to one charging connector, and each charging connector may charge the battery module through the connected charging interface. The M charging connectors may be charging connectors that establish connections to M charging interfaces of the battery module. M>1 and is an integer. In other words, the plurality of charging interfaces in the battery module are connected to a plurality of charging connectors.

When a vehicle has a charging requirement, to accelerate charging, the user may select a plurality of charging connectors to charge the vehicle at the same time. For example, in the charging system shown in FIG. 2, M charging interfaces of the Q charging interfaces may be connected to the M charging connectors one by one. Q≥M>1, and Q is an integer. A maximum quantity of charging connectors inserted into the charging interfaces does not exceed a total quantity of a plurality of charging interfaces of the vehicle. For example, the vehicle has four charging interfaces, and the user may select two, three, or four charging interfaces for inserting the charging connectors.

When there are plenty of charging interfaces and plenty of charging piles, the user inserts a sufficient quantity of charging connectors based on the required power of the battery module, to ensure that a sum of maximum output powers of the inserted charging connectors is greater than or equal to the required power of the battery module. Therefore, the sum of the maximum output powers of the M charging connectors is usually greater than the required power of the battery module.

After the M charging interfaces are connected to the M charging connectors, the charging control apparatus may perform, through communication cables, a handshake procedure with M charging piles to which the M charging connectors belong. For example, the charging control apparatus may separately send, through the communication cables, a parameter obtaining request to the M charging piles to which the M charging connectors belong. The parameter obtaining request is used to request a maximum output power of the charging pile. The M charging piles may feed back, to the charging control apparatus through the communication cables based on the received parameter obtaining request, maximum output powers supported by the M charging piles respectively, so that the charging control apparatus obtains the maximum output powers of the charging piles to which the M charging connectors respectively belong. It should be noted that different charging piles may have a same maximum output power or different maximum output powers.

A method for obtaining the maximum output power of each charging pile is not limited to the foregoing description. For example, after being inserted into the charging interface, each charging connector may actively report a maximum output power of each charging connector, and each charging interface may upload the received maximum output power to the charging control apparatus. For another example, after inserting each charging connector into the charging interface, the user may manually input, to the charging control apparatus, a maximum output power of a charging pile to which each charging connector belongs. The charging control apparatus may obtain the maximum output power of the charging pile by using an existing solution. For brevity, examples are not described herein again.

Step 330: Obtain N target charging connectors from the M charging connectors based on the required power of the battery module and the maximum output powers of the charging piles to which the M charging connectors respectively belong.

The N target charging connectors are charging connectors that are determined based on a current required power of the battery module and that are actually used to charge the battery module. N may be a positive integer not greater than M. In this embodiment of this application, the determined N target charging connectors may meet the following condition: A sum of maximum output powers of charging piles to which the N target charging connectors respectively belong is greater than or equal to the required power, and a sum of maximum output powers of charging piles to which any N-1 of the N target charging connectors respectively belong is less than the required power. In other words, the N target charging connectors are obtained from the M charging connectors, so that a charging power received by the battery module is exactly greater than or equal to the required power, and even if the charging power is greater than the required power, the charging power does not exceed too much. In other words, a total charging power output by the N target charging connectors participating in charging the battery module matches the current required power of the battery module.

When the target charging connectors are determined, the determined target charging connectors are different based on different value relationships between the required power of the battery module and the maximum output powers of the charging piles to which the M charging connectors respectively belong. Specifically, there are the following several cases.
1. When a sum of the maximum output powers of the M charging connectors is less than the required power, the charging control apparatus determines the M charging connectors as the target charging connectors. In other words, when the required power is greater than the sum of the maximum output powers of the M charging connectors, N=M.

For example, the vehicle has four charging interfaces, the user inserts two charging connectors: a charging connector 1 and a charging connector 2, and the two charging connectors respectively belong to a charging pile 1 and a charging pile 2. The maximum output power of the charging pile 1 is 100 kW, and the maximum output power of the charging pile 2 is 200 kW. In this case, a maximum output power of the charging connector 1 may be 100 kW, and a maximum output power of the charging connector 2 may be 200 kW. It is assumed that a current required power of the battery module of the vehicle is 400 kW. In this case, the charging control apparatus determines that the required power 400 kW of the battery module is greater than a sum of the maximum output powers of the charging connector 1 and the charging connector 2, which is 300 kW, and uses both the charging connector 1 and the charging connector 2 as target charging connectors.

It should be noted that when the sum of the maximum output powers of the M inserted charging connectors is less than the required power, the M inserted charging connectors are all target charging connectors. In this case, there is no resource waste. However, when there are plenty of charging interfaces and plenty of charging piles, the user usually inserts a sufficient quantity of charging connectors based on a required power, to ensure that a sum of maximum output powers of inserted charging connectors is greater than or equal to the required power of the battery module. This embodiment of this application mainly describes a case in which a sum of the maximum output powers of the M charging connectors is greater than or equal to the required power.

2. When a sum of maximum output powers of any M-i charging connectors of the M charging connectors is less than the required power, and a sum of maximum output powers of M-i+1 charging connectors is greater than or equal to the required power, the charging control apparatus determines the M-i+1 charging connectors as the N target charging connectors, where 0<i≤M-1, and i is an integer. In other words, when the sum of the maximum output powers of the M-i charging connectors<the required power≤the sum of the maximum output powers of the M-i+1 charging connectors, N=M-i+1.
i may increase from 1, and each time a value is selected, it is determined whether the following condition is met: A sum of maximum output powers of any M-i charging connectors in the M charging connectors is less than the required power, and a sum of maximum output powers of M-i+1 charging connectors is greater than or equal to the required power, until the value of i meets the foregoing condition. In this case, M-i+1 charging connectors may be determined as the target charging connectors.

For example, the quantity M of charging connectors inserted into the charging interfaces is 2. When i=1, it is assumed that a maximum output power of either of the two charging connectors is less than the required power, and that the required power is less than or equal to a sum of maximum output powers of the two charging connectors. In this case, the two charging connectors are used as the target charging connectors.

For example, in the foregoing example, the maximum output power of the charging pile 1 is 100 kW, and the maximum output power of the charging pile 2 is 200 kW. The user inserts the charging connector 1 of the charging pile 1 and the charging connector 2 of the charging pile 2 into the charging interfaces. If the current required power of the battery module of the vehicle is 300 kW, the charging control apparatus determines that the required power 300 kW of the battery module is equal to a sum of the maximum output powers of the charging connector 1 and the charging connector 2, which is 300 kW, and that the required power 300 kW is greater than the maximum output power 100 kW of the charging connector 1 and is also greater than the maximum output power 200 kW of the charging connector 2, and uses the charging connector 1 and the charging connector 2 as target charging connectors to charge. If the current required power of the battery module of the vehicle is 250 kW, the charging control apparatus determines that the required power 250 kW of the battery module is less than a sum of maximum output powers of the charging connector 1 and the charging connector 2, which is 300 kW, and that the required power 250 kW is greater than the maximum output power 100 kW of the charging connector 1 and is also greater than the maximum output power 200 kW of the charging connector 2, and uses the charging connector 1 and the charging connector 2 as target charging connectors.

3. When a maximum output power of any one of the M charging connectors is greater than or equal to the required power, the charging control apparatus determines a charging connector with a maximum output power in the M charging connectors as the target charging connector.

To reduce a quantity of charging connector switching times in a charging process, when the required power of the battery module is less than or equal to the maximum output power of any one of the M charging connectors, the charging connector with the maximum output power in the M charging connectors is used as the target charging connector. For example, in the foregoing example, the maximum output power of the charging pile 1 is 100 kW, and the maximum output power of the charging pile 2 is 200 kW. The user inserts the charging connector 1 of the charging pile 1 and the charging connector 2 of the charging pile 2 into the charging interfaces. Regardless of whether the current required power of the battery module is, for example, 150 kW, which is less than or equal to the maximum output power of the charging connector 2, or is, for example, 90 kW, which is less than or equal to the maximum output power of the charging connector 1, the charging connector 2 is still used as the target charging connector.

Step 340: Control the N target charging connectors to charge the battery module.

After the charging control apparatus determines the target charging connectors, the charging control apparatus may control the battery module to charge the battery module by using the N target charging connectors.

For example, the charging control apparatus may send a first charging request to a charging pile to which each of the N target charging connectors belongs, and a requested output power is included in the first charging request, and the requested output power is a power output by a charging pile that requests to receive the first charging request, or a power that is required to be output by a charging pile that receives the first charging request.

In a possible implementation, the charging control apparatus determines a maximum output power of a charging pile to which each target charging connector belongs as a corresponding requested output power, and the maximum output power of each charging pile may be included in the first charging request sent to each charging pile. In other words, each charging pile charges the battery module based on the maximum output power of each charging pile.

In another possible implementation, the charging control apparatus may alternatively determine a requested output power of each charging pile based on the required power of the battery module and the maximum output power of the charging pile to which each target charging connector belongs. This implementation is described below with reference to specific examples, and details are not described herein.

For another charging connector in the M charging connectors other than the N target charging connectors, to prevent a charging pile to which the another charging connector belongs from inappropriately outputting a power, the charging control apparatus may send a second charging request to the charging pile to which the another charging connector belongs, and the second charging request is used to indicate not to output a power.

Herein, the other charging connectors may be M-N charging connectors in the M charging connectors other than the N target charging connectors. In a possible manner in which the second charging request is used to indicate not to output a power, the second charging request indicates that a requested output power is zero.

Charging piles that receive the first charging request and the second charging request may separately charge the battery module based on received requested output powers.

Alternatively, in another implementation, the charging control apparatus may not send a charging request to the another charging connector, and a charging pile that does not receive a charging request may not need to output a power by default.

In an example, a maximum output power of the charging pile 1 is 100 kW, and a maximum output power of the charging pile 2 is 200 kW. The charging connector 1 of the charging pile 1 and the charging connector 2 of the charging pile 2 are connected to two charging interfaces of the battery module. If the required power of the battery module is 90 kW, and the charging control apparatus determines that a target charging connector is the charging connector 2, the charging control apparatus may send a first charging request to the charging pile 2, where a requested output power greater than zero is included in the first charging request; and may send a second charging request to the charging pile 1, a requested output power whose value is zero is included in the second charging request, or may not send a second charging request to the charging pile 1.

Optionally, before step 340, the method further includes step 350: The charging control apparatus determines a corresponding requested output power based on the required power of the battery module and the maximum output power of each of the N charging piles.

The charging control apparatus may determine, in the following manners, a power that is required to be output by each charging pile to which each target charging connector belongs to the battery module.
1. When a sum of maximum output powers of any M-i charging connectors of the M charging connectors is less than the required power, and a sum of maximum output powers of M-i+1 charging connectors is greater than or equal to the required power, the charging control apparatus may use the following determining manner:
   (1) When a sum of the maximum output powers of the N charging piles is equal to the required power, the charging control apparatus determines that requested output powers of the N charging piles are respective maximum output powers.

For example, in the foregoing example, the maximum output power of the charging pile 1 is 100 kW, and a maximum output power of the charging pile 2 is 200 kW. The charging connector 1 of the charging pile 1 and the charging connector 2 of the charging pile 2 are connected to two charging interfaces of the battery module. A required power of the battery module is 300 kW, and the charging control apparatus determines that target charging connectors are the charging connector 1 and the charging connector 2. In this case, the charging control apparatus may determine that a power requested to be output by the charging pile 1 is 100 kW, and a power requested to be output by the charging pile 2 is 200 kW.

Corresponding to step 340, a first charging request sent by the charging control apparatus to the charging pile 1 may indicate that a requested output power is 100 kW, and a first charging request sent by the charging control apparatus to the charging pile 2 may indicate that a requested output power is 200 kW.

(2) When a sum of maximum output powers of the N charging piles is greater than the required power, the charging control apparatus determines a requested output power of a first charging pile in the N charging piles as X-P_{N-1}, where the first charging pile is any one of the N charging piles, X is the required power, P_{N-1} is a sum of maximum output powers of other N-1 charging piles than the first charging pile in the N charging piles, and X>P_{N-1}>0; and determines that requested output powers of the other N-1 charging piles than the first charging pile in the N charging piles are respective maximum output powers.

The first charging pile is a charging pile with a smallest value of a maximum output power in the N charging piles.

For example, in the foregoing example, the maximum output power of the charging pile 1 is 100 kW, and the maximum output power of the charging pile 2 is 200 kW. The charging connector 1 of the charging pile 1 and the charging connector 2 of the charging pile 2 are connected to two charging interfaces of the battery module. A required power of the battery module is 250 kW, and the charging control apparatus determines that target charging connectors are the charging connector 1 and the charging connector 2. The charging control apparatus may determine that a charging pile with a smallest value of a maximum output power in the charging pile 1 and the charging pile 2 is the charging pile 1, use the charging pile 1 as a first charging pile, and use the charging pile 2 as a charging pile other than the charging pile 1. In this case, a power that the charging control apparatus requests to be output by the charging pile 2 is the maximum output power 200 kW, and a power that the charging control apparatus requests to be output by the charging pile 1 is 250-200=50 kW.

Corresponding to step 340, a first charging request sent by the charging control apparatus to the charging pile 1 may indicate that a requested output power is 50 kW, and a first charging request sent by the charging control apparatus to the charging pile 2 may indicate that a requested output power is 200 kW.

2. When a maximum output power of any one of the M charging connectors is greater than or equal to the required power, the charging control apparatus determines that a requested output power of a charging connector whose output power is the smallest in the M charging connectors is the required power.

For example, in the foregoing example, the maximum output power of the charging pile 1 is 100 kW, and the maximum output power of the charging pile 2 is 200 kW. The charging connector 1 of the charging pile 1 and the charging connector 2 of the charging pile 2 are connected to two charging interfaces of the battery module. If a required power of the battery module is 90 kW, and a controller determines that a target charging connector is the charging connector 2, a power that the controller requests to be output by the charging pile 2 is 90 kW.

Corresponding to step 340, the charging control apparatus sends a second charging request to the charging pile 1 or does not send a charging request, and a first charging request sent by the charging control apparatus to the charging pile 2 may indicate a requested output power of 90 kW.

To further ensure that the target charging connector can normally transmit the output power to the battery module and prevent another charging connector from outputting an output power inappropriately, which causes waste of charging resources, in consideration of high voltage safety, after the charging control apparatus sends the first charging request and the second charging request, the following control operations may be further performed.

The charging control apparatus controls a positive electrode switch and a negative electrode switch of each of N charging interfaces connected to the N target charging connectors to be turned on, and the charging control apparatus controls a positive electrode switch and a negative electrode switch of each of M-N charging interfaces connected to the M-N charging connectors other than the N target charging connectors to be turned off.

For charging interfaces corresponding to the target charging connectors, the charging control apparatus turns off switches of these charging interfaces. For charging interfaces corresponding to other charging connectors that are inserted into the charging interfaces and that are not used as target charging connectors, the charging control apparatus turns off switches of these charging interfaces. For example, the maximum output power of the charging pile 1 is 100 kW, and the maximum output power of the charging pile 2 is 200 kW. The charging connector 1 of the charging pile 1 and the charging connector 2 of the charging pile 2 are connected to two charging interfaces of the battery module. If a required power of the battery module is 90 kW, and the charging control apparatus determines that a target charging connector is the charging connector 2, the charging control apparatus turns on a positive electrode switch and a negative electrode switch of the charging interface 2, and turns off a positive electrode switch and a negative electrode switch of the charging interface 1, to ensure that only the charging pile 2 can be used to charge the battery module.

In addition, for safety purposes, after detecting that the M charging connectors are inserted into the M charging interfaces, the charging control apparatus may further determine that the charging control apparatus and the charging piles to which the M charging connectors respectively belong separately pass insulation detection, and perform step 310 after the charging control apparatus and the charging piles to which the M charging connectors belong separately pass insulation detection.

Specifically, the charging piles to which the M charging connectors respectively belong may separately determine whether insulation detection on the corresponding charging pile succeeds. When it is determined that insulation detection succeeds, the charging pile sends an insulation detection result to the charging control apparatus through the communication cable, to indicate that insulation detection succeeds. When it is determined that insulation detection fails, the charging pile may not feed back an insulation detection result to the charging control apparatus or send an insulation detection result that indicates that insulation detection fails. When receiving insulation detection results sent by all charging piles that indicate that insulation detection succeeds, the charging control apparatus may determine whether insulation detection on the apparatus succeeds. When insulation detection on the apparatus also succeeds, the charging control apparatus may perform a step of determining the target charging connectors and subsequent steps. When a received insulation detection result indicates that insulation detection fails or no insulation detection result of any charging pile is received, the charging control apparatus may suspend working, and no longer perform the step of determining the target charging connectors and subsequent steps.

It should be understood that a sequence of performing insulation detection of the charging pile and insulation detection of the charging control apparatus is not limited in this application. For example, the charging pile may first perform insulation detection, and then the charging control apparatus performs insulation detection after the former detection succeeds; or the charging control apparatus may first perform insulation detection, and then the charging pile performs insulation detection after the former detection succeeds; or the charging control apparatus and the charging pile may perform insulation detection at the same time.

Based on the foregoing solution, when it is determined that at least two charging connectors are inserted into a plurality of charging interfaces, the charging control apparatus determines, based on a value relationship obtained through comparison between a current required power of the battery module of the vehicle and a maximum output power of a charging pile to which each inserted charging connector belongs, specific charging connectors that are in the inserted charging connectors and that are used to charge the vehicle, to control the determined charging connectors to charge the vehicle. In this way, a total charging power output by a specific quantity of charging connectors currently participating in charging matches the current required power of the battery module, so that excessive charging resources are not occupied. This improves a charging speed of another vehicle that is on a same charging pile and that is charged by using another charging connector, and implements appropriate use of charging resources.

It should be noted that, as charging time advances, the current required power of the vehicle keeps changing. To ensure appropriate use of charging resources, the specific quantity of charging connectors that charge the vehicle may be flexibly adjusted as the required power changes. In a possible implementation, the charging control apparatus may periodically perform the foregoing method by using preset duration as a periodicity. It should be understood that the preset duration may be set by a person skilled in the art based on an actual requirement, or may be set before the charging control apparatus is delivered from a factory, or may be set by a user. This is not limited in this application.

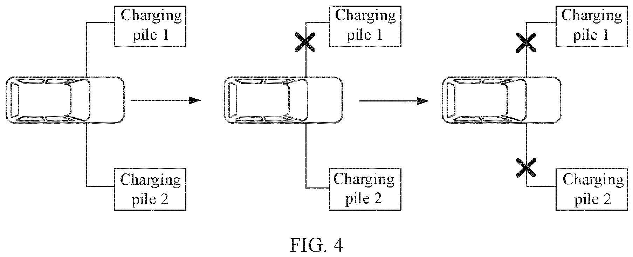

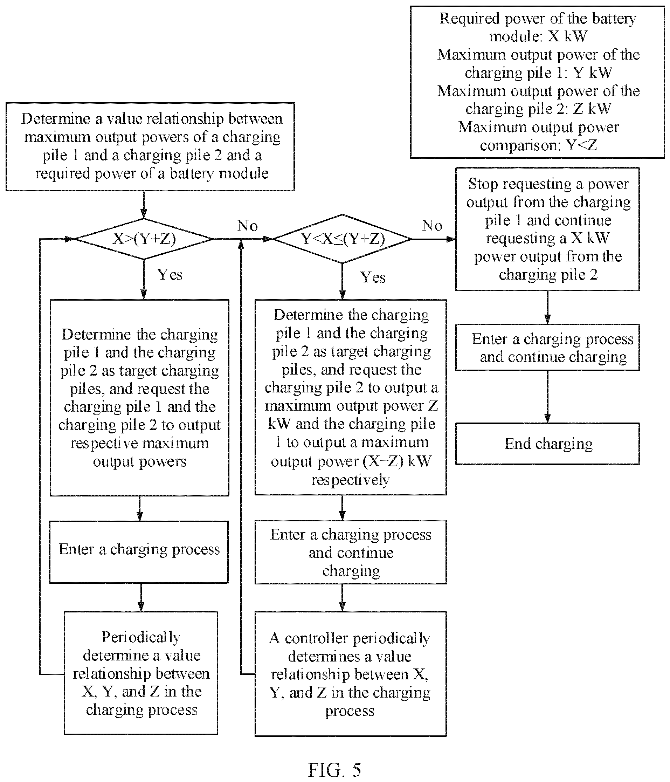

A specific example is provided below with reference to FIG. 4 and FIG. 5.

FIG. 4 is a schematic diagram of a scenario in which two charging piles are used for charging according to an embodiment of this application. At initial charging, when the charging control apparatus determines that a required power of a battery module is greater than a sum of maximum output powers of a charging pile 1 and a charging pile 2, or a required power of the battery module is greater than a maximum output power of one of the charging piles and is less than or equal to a sum of maximum output powers of the two charging piles, both the charging pile 1 and the charging pile 2 are used to charge the battery module. With charging continues, when the charging control apparatus determines that the required power of the battery module no longer meets the foregoing two cases, the charging pile 1 is no longer used to charge the battery module, and the charging pile 2 continues to be used to charge the battery module until the required power of the battery module changes to 0 kW, and using the charging pile 2 to charge the battery module also be stopped, and a charging process ends.

FIG. 5 is further a schematic flowchart of a charging control method provided in an embodiment of this application in the scenario shown in FIG. 4. It should be understood that the procedure shown in FIG. 5 may be performed by the foregoing charging control apparatus, or may be performed by a component (such as a circuit, a chip, or a chip system) configured in the charging control apparatus, or may be implemented by a logical module or software that can implement all or some functions of the charging control apparatus. This is not limited in this application.

In FIG. 5, X represents the required power of the battery module, Y represents the maximum output power of the charging pile 1, and Z represents the maximum output power of the charging pile 2. It is assumed that the maximum output power of the charging pile 1 is 100 kW, and the maximum output power of the charging pile 2 is 200 kW. When the user inserts a charging connector 1 of the charging pile 1 and a charging connector 2 of the charging pile 2 into charging interfaces, the charging control apparatus first determines a value relationship between X, Y, and Z of the battery module. If it is determined that X>(Y+Z) when charging starts, that is, when the required power of the battery module is greater than the sum of the maximum output powers of the charging pile 1 and the charging pile 2, the charging control apparatus may determine that both the charging connector 1 and the charging connector 2 are target charging connectors. The charging control apparatus separately sends a first charging request to the charging pile 1 and the charging pile 2, to request the charging piles to output the respective maximum output powers. For example, when the required power X of the battery module is 400 kW, the charging control apparatus sends a first charging request to the charging pile 1, to request the charging pile 1 to output a power of 100 kW, and sends a first charging request to the charging pile 2, to request the charging pile 2 to an output power of 200 kW. Then, after receiving the first charging requests, the charging pile 1 and the charging pile 2 may enter a charging process based on the first charging request. During charging, the charging control apparatus continuously determines a value relationship between X, Y, and Z by using a preset time as a periodicity. If it is determined that Y<X≤(Y+Z), that is, the required power of the battery module is greater than a maximum output power of one of the charging piles and is less than the sum of the maximum output powers of the two charging piles, the charging control apparatus may determine that both the charging connector 1 and the charging connector 2 are target charging connectors, and the charging pile 1 may be used as a first charging pile because the maximum output power of the charging pile 1 is the smallest. The charging control apparatus sends a first charging request, to request the charging pile 2 to output a maximum output power of Z kW, and sends a first charging request to the charging pile 1, to request to output a power of (X-Z) kW. For example, with charging continues, when the required power X of the battery module is 250, the charging control apparatus sends a first charging request to the charging pile 2, to request the charging pile 2 to output a power of 200 kW, and sends a first charging request to the charging pile 1, to request the charging pile 1 to output a power of 50 kW. Similarly, after receiving the first charging requests, the charging pile 1 and the charging pile 2 may enter a charging process based on the first charging request. In addition, in a charging process, the charging control apparatus still continuously determines a value relationship between X, Y, and Z by using a preset time as a periodicity. If it is determined that X, Y, and Z do not meet the foregoing two cases, it indicates that X is less than or equal to a maximum output power of any one of the charging connectors. In this case, the charging control apparatus no longer sends a first charging request to the charging pile 1, and may send a second charging request to the charging pile 1, to request the charging pile 1 to no longer output a power, and continue to send a first charging request to the charging pile 2, to request to output the required power of the battery module. For example, as charging continues, the required power X of the battery module is 150 kW. In this case, the charging control apparatus sends the second charging request to the charging pile 1, to request to output a power of 0 kW, and sends the first charging request to the charging pile 2, to request to output a power of 150 kW. Then, after receiving the first charging request, the charging pile 2 may continue to be used to charge the battery module, while the charging control apparatus still continuously determines a value of the required power, to adjust a value of an output power of the charging pile 2, and stops charging until the required power of the battery module changes to 0 kW.

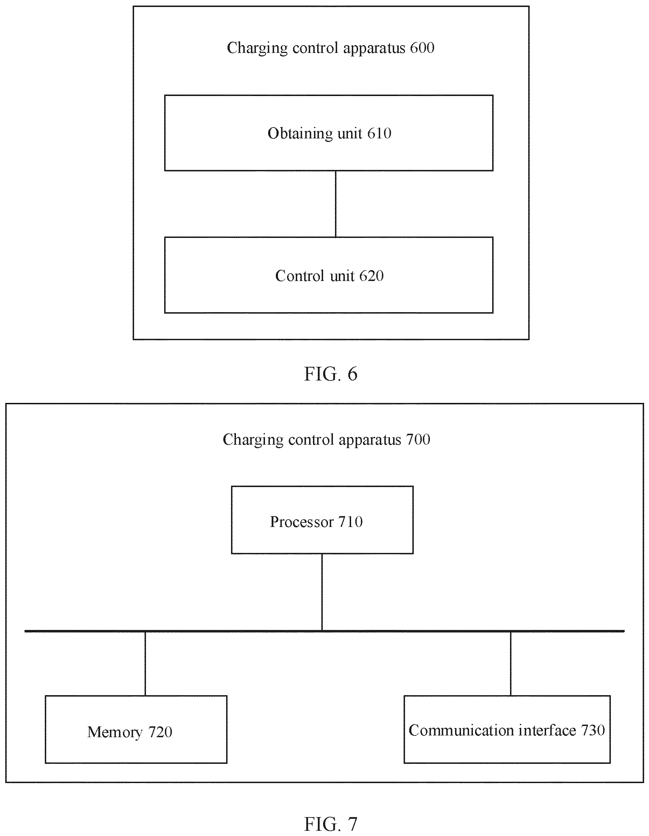

The charging control method provided in embodiments of this application is described above in detail with reference to FIG. 3 to FIG. 5. With reference to FIG. 6 to FIG. 7, the following describes in detail a charging control apparatus provided in an embodiment of this application.

FIG. 6 is a schematic block diagram of a charging control apparatus according to an embodiment of this application. As shown in FIG. 6, the charging control apparatus 600 may include an obtaining unit 610 and a control unit 620. The units in the battery management system 600 may be configured to perform the steps performed by the charging control apparatus in the method 300 shown in FIG. 3, or may be configured to perform the steps performed by the charging control apparatus in the procedure shown in FIG. 5.

Specifically, the obtaining unit 610 may be configured to obtain a required power of a battery module. The battery module includes a plurality of charging interfaces, and the required power is a charging power required by the battery module; the obtaining unit 610 may be further configured to obtain maximum output powers of charging piles to which M charging connectors respectively belong, where the M charging connectors include a charging connector that establishes a connection to any one of the plurality of charging interfaces; and the obtaining unit 610 may be further configured to obtain N target charging connectors from the M charging connectors based on the required power of the battery module and the maximum output powers of the charging piles to which the M charging connectors respectively belong, where N≤M, M>1, and M and N are integers. The control unit 620 may be configured to control to charge the battery module by using the N target charging connectors.

Optionally, a sum of maximum output powers of charging piles to which the N target charging connectors respectively belong is greater than or equal to the required power, and a sum of maximum output powers of charging piles to which any N-1 of the N target charging connectors respectively belong is less than the required power.

Optionally, the charging control apparatus 600 may further include a sending unit, which may be configured to send a first charging request to a charging pile to which each of the N target charging connectors belongs, where the first charging request includes a requested output power, and the requested output power is a power that is required to be output by a charging pile that receives the first charging request.

Optionally, the sending unit may be further configured to send a second charging request to a charging pile to which each of other charging connectors than the N target charging connectors in the M charging connectors belongs, where the second charging request is used to indicate to not output a power.

Optionally, the charging control apparatus 600 may further include a determining unit. The determining unit may be configured to determine a corresponding requested output power based on the required power of the battery module and the maximum output powers of the charging piles to which the N target charging connectors respectively belong.

Optionally, the determining unit may be specifically configured to: when a sum of the maximum output powers of the charging piles to which the N target charging connectors respectively belong is equal to the required power, determine that the requested output powers of the charging piles to which the N target charging connectors respectively belong are respective maximum output powers.

Optionally, the determining unit 610 may be specifically configured to: when the sum of the maximum output powers of the charging piles to which the N target charging connectors respectively belong is greater than the required power, determine a requested output power of a first charging pile in the N charging piles as X-P_{N-1}, where the first charging pile is one of the N charging piles, X is the required power, P_{N-1} is a sum of maximum output powers of the other charging piles in the N charging piles than the first charging pile, and X>P_{N-1}>0; and determine that the requested output powers of the other charging piles are respective maximum output powers.

Optionally, the first charging pile is a charging pile with a smallest value of a maximum output power in the N charging piles.

Optionally, a positive electrode of each of the plurality of charging interfaces is connected to the battery module by using a positive electrode switch, and a negative electrode of each of the plurality of charging interfaces is connected to the battery module by using a negative electrode switch. The control unit 620 may be further configured to: control a positive electrode switch and a negative electrode switch of each of N charging interfaces connected to the N target charging connectors to be turned on, and control a positive electrode switch and a negative electrode switch of each of the other charging interfaces of the plurality of charging interfaces to be turned off.

Optionally, the plurality of charging interfaces are direct current charging interfaces.

Optionally, the charging control apparatus is a BMS.

It should be understood that unit division in this embodiment of this application is an example, and is merely logical function division. In actual implementation, another division manner may be used. In addition, functional units in embodiments of this application may be integrated into one processor, or the units may exist alone physically, or two or more units are integrated into one unit. The integrated unit may be implemented in a form of hardware, or may be implemented in a form of a software functional unit.

FIG. 7 is another schematic block diagram of a charging control apparatus according to an embodiment of this application. The battery management system 700 may be configured to implement functions of the charging control apparatus in the foregoing methods. The battery management system 700 may be a chip system. In this embodiment of this application, the chip system may include a chip, or may include a chip and another discrete component.

As shown in FIG. 7, the battery management system 700 may include at least one processor 710, which is configured to implement a function of the charging control apparatus in the method provided in embodiments of this application.

For example, when the battery management system 700 is configured to implement the function of the charging control apparatus in the method provided in embodiments of this application, the processor 710 may be configured to: obtain a required power of a battery module, where the battery module includes a plurality of charging interfaces, and the required power is a charging power required by the battery module; obtain maximum output powers of charging piles to which M charging connectors respectively belong, where the M charging connectors include a charging connector that establishes a connection to any one of the plurality of charging interfaces; obtain N target charging connectors from the M charging connectors based on the required power of the battery module and the maximum output powers of the charging piles to which the M charging connectors respectively belong, where N≤M, M>1, and M and N are integers; and control to charge the battery module by using the N target charging connectors. For details, refer to detailed descriptions in the method examples. Details are not described herein again.

The battery management system 700 may further include at least one memory 720, which is configured to store program instructions and/or data. The memory 720 is coupled to the processor 710. The coupling in embodiments of this application may be an indirect coupling or a communication connection between apparatuses, units, or modules in an electrical form, a mechanical form, or another form, and is used for information exchange between the apparatuses, the units, or the modules. The processor 710 may collaboratively operate with the memory 720. The processor 710 may execute the program instructions stored in the memory 720. At least one of the at least one memory may be included in the processor.

The battery management system 700 may further include a communication interface 730, configured to communicate with another device through a transmission medium, so that the battery management system 700 can communicate with the another device. For example, when the battery management system 700 is configured to implement the functions of the charging control apparatus in the method provided in embodiments of this application, the another device may be a charging pile. The communication interface 730 may be, for example, a transceiver, an interface, a bus, a circuit, or an apparatus that can implement a receiving and sending function. The processor 710 may send and receive data and/or information by using the communication interface 730, and is configured to implement the method performed by the charging control apparatus in the embodiment corresponding to FIG. 3.

A specific connection medium between the processor 710, the memory 720, and the communication interface 730 is not limited in this embodiment of this application. In FIG. 7, the processor 710, the memory 720, and the communication interface 730 may be connected through a bus in this embodiment of this application. The bus is represented by a thick line in FIG. 7, and connections between other components are merely examples for description, and should not be construed as a limitation. The bus may be classified into an address bus, a data bus, a control bus, and the like. For ease of representation, only one thick line is used to represent the bus in FIG. 7, but this does not mean that there is only one bus or only one type of bus.

It should be understood that, the processor in this embodiment of this application may be an integrated circuit chip, and has a signal processing capability. During implementation, the steps of the foregoing method embodiments can be accomplished by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished through a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of RAM may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

This application further provides a charging system. The charging system includes: a battery module, a plurality of direct current charging interfaces connected to the battery module, where each of the plurality of direct current charging interfaces is configured to connect to a charging connector; and a charging control apparatus, connected to the plurality of direct current charging interfaces through communication cables, and the charging control apparatus is configured to perform the method in the embodiment shown in FIG. 3 or FIG. 5. In a possible design, the charging control apparatus is a BMS.

This application further provides a computer program product. The computer program product includes a computer program (which may also be referred to as code or instructions). When the computer program is run, a computer is enabled to perform the method in the embodiment shown in FIG. 3 or FIG. 5.

This application further provides a computer-readable storage medium. The computer-readable storage medium stores a computer program (which may also be referred to as code or instructions). When the computer program is run, a computer is enabled to perform the method in the embodiment shown in FIG. 3 or FIG. 5.

Terms such as "unit", and "module" used in this specification indicate computer-related entities, hardware, firmware, combinations of hardware and software, software, or software being executed.

A person of ordinary skill in the art may be aware that, in combination with illustrative logical blocks (illustrative logical blocks) described in embodiments disclosed in this specification and steps (steps), this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In embodiments provided in this application, it should be understood that the disclosed apparatus/ device and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, each of the units may exist alone physically, or two or more units are integrated into one unit.

Functions of the functional units in all or some of the foregoing embodiments may be implemented by using software, hardware, firmware, or any combination thereof. When software is used to implement embodiments, all or a part of the embodiments may be implemented in a form of a computer program product. The computer program product includes one or more computer instructions (program). When the computer program instructions (program) are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

When functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application should fall within the protection scope of this application. Therefore, the protection scope of this application should be subject to the protection scope of the claims.

## Claims

1. A charging control method, comprising:
obtaining a required power of a battery module, wherein the battery module comprises a plurality of charging interfaces, and the required power is a charging power required by the battery module;
obtaining maximum output powers of charging piles to which M charging connectors respectively belong, wherein the M charging connectors comprise a charging connector that establishes a connection to any one of the plurality of charging interfaces;
obtaining N target charging connectors from the M charging connectors based on the required power of the battery module and the maximum output powers of the charging piles to which the M charging connectors respectively belong, wherein N≤M, M>1, and M and N are integers; and
controlling to charge the battery module by using the N target charging connectors.

2. The method according to claim 1, wherein a sum of maximum output powers of charging piles to which the N target charging connectors respectively belong is greater than or equal to the required power, and a sum of maximum output powers of charging piles to which any N-1 of the N target charging connectors respectively belong is less than the required power.

3. The method according to claim 1 or 2, wherein before the controlling to charge the battery module by using the N target charging connectors, the method comprises:
sending a first charging request to a charging pile to which each of the N target charging connectors belongs, wherein the first charging request comprises a requested output power, and the requested output power is a power that is required to be output by a charging pile that receives the first charging request.

4. The method according to claim 3, wherein the method further comprises:
sending a second charging request to a charging pile to which each of other charging connectors than the N target charging connectors in the M charging connectors belongs, wherein the second charging request is used to indicate to not output a power.

5. The method according to claim 3 or 4, wherein the method further comprises:
determining corresponding requested output powers based on the required power of the battery module and the maximum output powers of the charging piles to which the N target charging connectors respectively belong.

6. The method according to claim 5, wherein the determining corresponding requested output powers based on the required power of the battery module and the maximum output powers of the charging piles to which the N target charging connectors respectively belong comprises:
when a sum of the maximum output powers of the charging piles to which the N target charging connectors respectively belong is equal to the required power, determining that the requested output powers of the charging piles to which the N target charging connectors respectively belong are respective maximum output powers.

7. The method according to claim 5, wherein the determining corresponding requested output powers based on the required power of the battery module and the maximum output powers of the charging piles to which the N target charging connectors respectively belong comprises:
when a sum of the maximum output powers of the N charging piles is greater than the required power, determining a requested output power of a first charging pile in the N charging piles as X-P_{N-1}, wherein the first charging pile is one of the N charging piles, X is the required power, and P_{N-1} is a sum of maximum output powers of other charging piles in the N target charging piles than the first charging pile, wherein X>P_{N-1}>0; and
determining that requested output powers of the other charging piles are respective maximum output powers.

8. The method according to claim 7, wherein the first charging pile is a charging pile with a smallest value of a maximum output power in the N charging piles.

9. The method according to any one of claims 1 to 8, wherein a positive electrode of each of the plurality of charging interfaces is connected to the battery module by using a positive electrode switch, and a negative electrode of each of the charging interfaces is connected to the battery module by using a negative electrode switch.

10. The method according to claim 9, wherein after the controlling to charge the battery module by using the N target charging connectors, the method further comprises:
controlling positive electrode switches and negative electrode switches of N charging interfaces that establish connections to the N target charging connectors to be turned on; and
controlling a positive electrode switch and a negative electrode switch of another charging interface of the plurality of charging interfaces to be turned off.

11. The method according to any one of claims 1 to 10, wherein the plurality of charging interfaces are direct current charging interfaces.

12. A charging control apparatus, comprising a processor, wherein the processor is configured to invoke program code to implement the method according to any one of claims 1 to 11.

13. A charging system, comprising:
a battery module
a plurality of charging interfaces connected to the battery module, wherein each of the plurality of charging interfaces is configured to connect to a charging connector; and
a charging control apparatus, connected to the plurality of direct current charging interfaces, and the charging control apparatus is configured to perform the method according to any one of claims 1 to 11.

14. The charging system according to claim 13, wherein the charging control apparatus is a battery management system.

15. A computer-readable storage medium, wherein the computer-readable storage medium stores a computer program, and when the computer program is executed by a processor, a computer is enabled to perform the method according to any one of claims 1 to 11.

16. A computer program product, comprising a computer program, wherein when the computer program is run, a computer is enabled to perform the method according to any one of claims 1 to 11.
